# EUROPEAN PATENT SPECIFICATION

(11) **EP 0 554 586 B1**
(45) Date of publication and mention of the grant of the patent: **19.03.1997**
(21) Application number: 92203951.6
(22) Date of filing: 16.12.1992
(51) Int. Cl.: H04N 5/14

(54) **Recursive video signal processor**
Rekursiver Video Signal Prozessor
Processeur de signal vidéo récursif

(30) Priority: 23.12.1991 EP 91203398; 13.02.1992 IT MI920302
(43) Date of publication of application: 11.08.1993
(73) Proprietor: Philips Electronics N.V., 5621 BA Eindhoven (NL); Philips S.p.A., 20124 Milano (IT)
(72) Inventor: Lo Muzio, Pierluigi, NL-5656 AA Eindhoven (NL)
(74) Representative: Steenbeek, Leonardus Johannes

(56) References cited:
- EP-A- 0 169 709
- EP-A- 0 329 151
- EP-A- 0 415 491
- US-A- 4 218 703
- US-A- 4 797 740
- IEEE TRANSACTIONS ON CIRCUITS AND SYSTEMS FOR VIDEO TECHNOLOGY vol. 1, no. 1, March 1991, pages 35 - 41 ICHIRO TAMITANI ET AL. 'A Real -Time HDTV Signal Processor: HD-VSP'
- PATENT ABSTRACTS OF JAPAN vol. 8, no. 157 (P-288)20 July 1984 & JP-A-59 053 964

## Description

The invention relates to a recursive video signal processor of the type suitable for motion vector estimation or noise reduction.

European patent application EP-A-0,415,491 (PHN 13,068) describes a recursive video signal processing algorithm for such a recursive video signal processor. Whereas the motion vector estimation algorithm described in said document operates satisfactorily, some problems occur in the hardware design of a motion vector estimator using this algorithm for high definition television (HD) applications.

The video information related to high definition television is four times the video information related to normal definition television (ND). The line number per frame is doubled from 625 to 1250. The pixel number per line is doubled from 864 to 1728. This means that, with the same frame period, the clock frequency of high definition television is four times the clock frequency of normal definition television. The CCIR recommends a luminance sample frequency of 13.5 MHz for normal definition television. In high definition television the luminance sample frequency will be 54 MHz.

The increased video information and the increased sample frequency result in digital signal processing problems. Current technology does not yet provide an effective digital signal processing for this data rate.

It is noted that the article "A Real-Time HDTV Signal Processor: HD-VSP", published in IEEE transactions on circuits and systems for video technology, March 1991, Vol. 1, No. 1, pp. 35-41, discloses a programmable real-time HDTV signal processor, in which in order to expand the flexibility, eight video signal processor (VSP) clusters and programmable time-expansion/compression units are employed. An input HDTV signal is converted to eight horizontally adjacent time-expanded sub-regional signals, to reduce their sampling rate to that of conventional TV signals. The converted signals are then processed by the eight clusters in the same manner as the VSP. Processed signals obtained from the eight clusters are time-compressed and multiplexed to reconstruct an output HDTV signal. In a basic VSP configuration, video signal processor modules are connected in parallel to input, output and feedback video buses. A variable delay unit (VDU) is employed in the feedback bus. It achieves a delay of up to one frame on feedback data. In the time-expansion/compression process employed in the HD-VSP, HDTV frame data is divided into overlapping columns. Input and feedback bus switch units (BSU) are used for inter-cluster overlap-add/save implementation.

This known device is not capable to handle video signal sections which are both horizontally and vertically adjacent to each other. Although the variable delay unit (VDU) provides a variable delay, it is still only one delay period, and the publication does not give any indication on how to handle recursive video signal processing operations which require a plurality of feedback signals which have underwent mutually different delays.

It is, inter alia, a main object of the invention to provide a recursive video signal processor which can cope with the high data rates involved in high definition television.

For this purpose, one aspect of the invention provides a recursive video signal processor as set out in claim 1. Advantageous embodiments of the invention are set out in the subclaims.

These and other aspects of the invention will be apparent from and elucidated with reference to the embodiments described hereinafter.

In the drawings:
Fig. 1 shows the demultiplexing of a high definition (HD) video signal into four spatially adjacent quadrants;
Fig. 2 shows the spatial location of spatial and temporal prediction vectors for the recursive motion vector estimator of the present invention;
Fig. 3A shows a block diagram of a normal definition (ND) recursive motion estimator having four prediction loops and where these loops can be opened for linking with other motion estimators;
Fig. 3B shows a block diagram of a HD motion estimator comprising four ND motion estimators having linked prediction loops;
Fig. 4 shows a block diagram of the HD motion estimator operating with four quadrants;
Fig. 5 shows the four quadrants motion estimator cooperating with a four quadrants interpolator; and
Fig. 6 shows the overlap of the four quadrants.

The invention is based on the recognition that in view of the high data rates involved in, for example, high definition (HD) television, it is worthwhile to parallelize the high speed path into more paths at lower speed. A demultiplexer and a multiplexer are necessary for this purpose. This (de)multiplexing operation can be arranged in many ways: the video signal is a three-dimensional signal, so in general the signal can be demultiplexed in a three- dimensional domain. Typical examples are:
. pixel demultiplexing along the horizontal domain,
. line demultiplexing along the vertical domain, and
. field demultiplexing along the time domain.

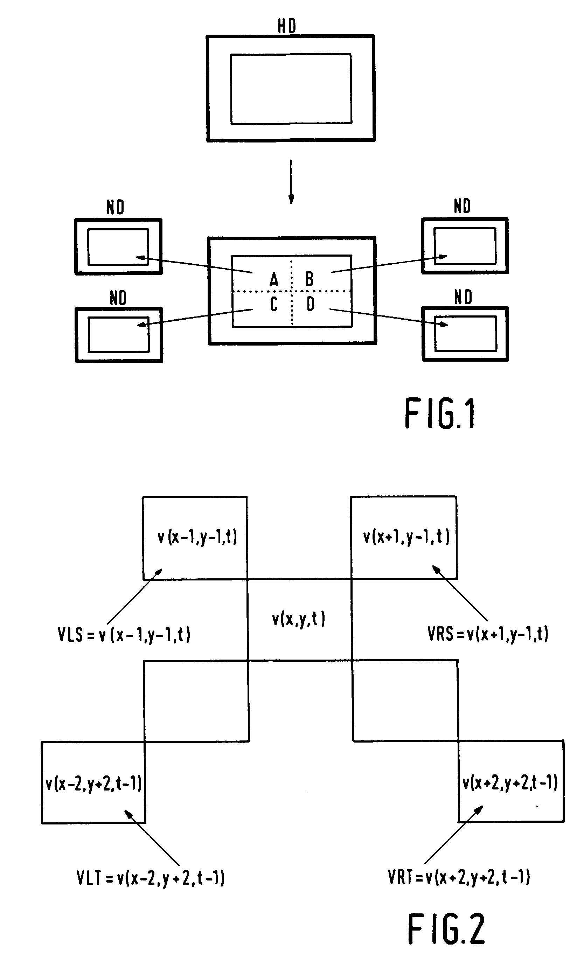

Demultiplexing the video signal into four adjacent quadrants as disclosed in Research Disclosure, September 1991, 643, item 32903, is another example. It operates in the two dimensional spatial domain. This demultiplexing can be beneficially used for HD applications. Dividing the HD field into four ND fields as illustrated in Fig. 1, the HD signal can be split into four ND channels A,B,C,D, each of which being in accordance with the CCIR recommendations 601 and 656. For instance, this demultiplexing has been employed for the HD digital recording with four ND digital recorders. In general the four quadrants demultiplexing provides the advantage of using ND systems for HD applications. As is well known, an HD frame comprises 1250 lines of 1728 pixels, of which only an active part of 1152 lines of 1440 pixels contains vision information.

The invention relates to the application of the four quadrants demultiplexing technique to the hardware which for the first time implements the above-mentioned motion estimation algorithm of EP-A-0,415,491 (PHN 13,068) for HD motion estimation. The application of the four quadrants demultiplexing technique to motion estimation is new and benefits from the above-mentioned advantages of lower speed in the digital signal processing operations and simpler realization with existing ND modules. In future, devices intended for ND motion estimation may also be used for HD motion estimation.

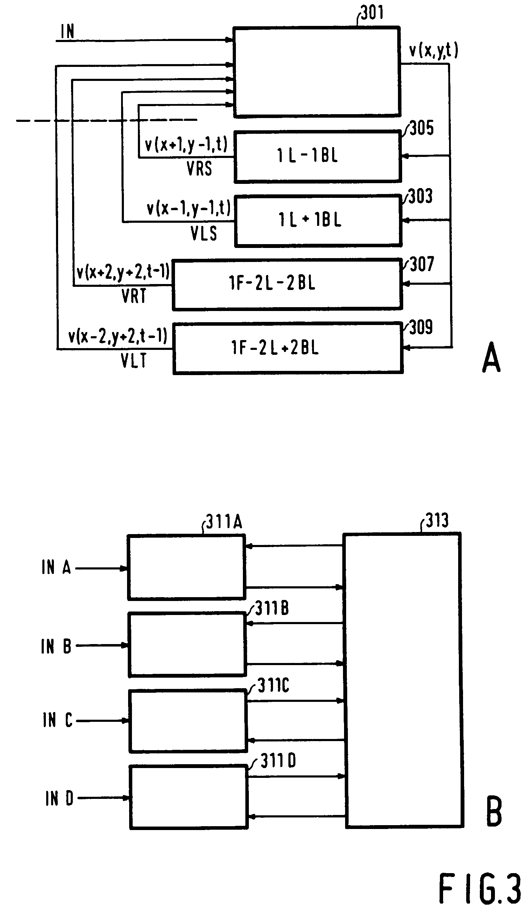

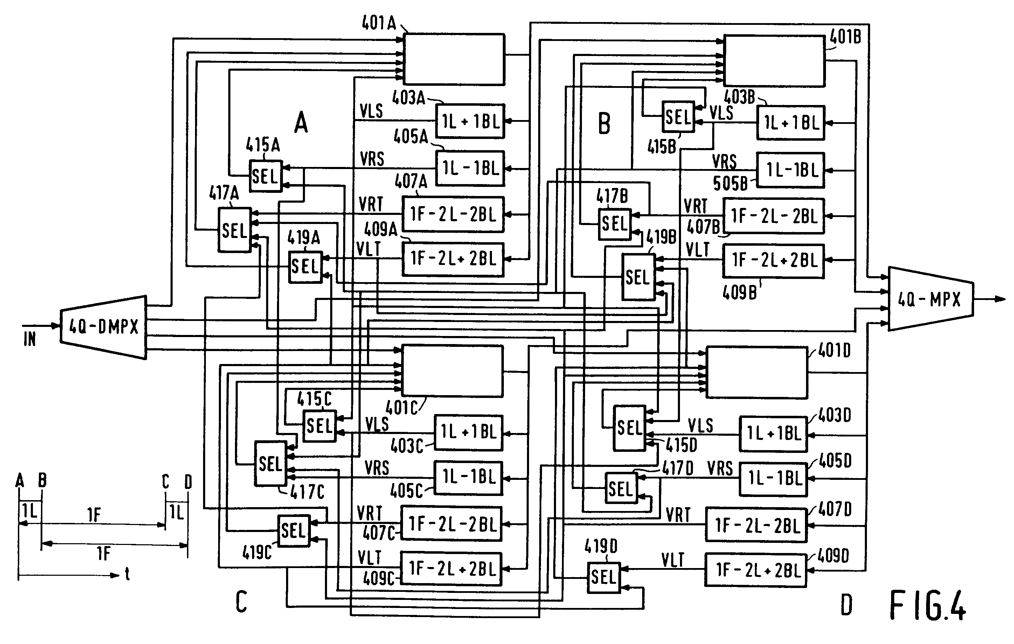

The application of the four quadrants demultiplexing technique to the HD recursive search motion estimation is not trivial. The problem is that an HD motion estimation cannot be performed with four ND estimators independently working in parallel. The reason for this problem is that in a preferred embodiment of the motion vector estimation algorithm described in more detail in the above-mentioned European patent application EP-A-0,415,491 (PHN 13,068) and illustrated in Fig. 2, the vector v(x,y,t) estimated at the time t for the block at the spatial position (x,y) depends on the left and right spatial prediction vectors v(x±1,y-1,t) VLS and VRS calculated for the present field and on the left and right temporal prediction vectors v(x±2,y+2,t-1) VLT and VRT calculated for the previous field. Every estimated vector depends on previous estimations at different spatial positions, so that on the borders, every quadrant needs output data from another quadrant. The present invention provides the solution to this new problem. The problem is solved by opening the prediction loops of the ND motion estimator shown in Fig. 3A and by linking four of these ND motion estimators as shown in Fig. 3B. In the example of Fig. 3A, the prediction loops of the ND motion estimator are opened after the feedback delays, but alternatively, these loops can be opened before the feedback delays. Opening the prediction loops after the feedback delays allows for a very simple and straightforward implementation of the feedback loops linking as is shown in more detail in the embodiment of Fig. 4. By linking the four ND motion estimators operating for the four quadrants as shown in Fig. 3B, the predictions are available for every ND motion estimator.

In the ND motion vector estimator shown in Fig. 3A, the input video signal is applied to a vector estimation block 301. An output of the vector estimation block 301 is coupled to four feedback delays 303, 305, 307, 309 respectively delaying by one line period plus one block period (1L + 1BL), which yields the left spatial prediction VLS shown in Fig. 2, by one line period minus one block period (1L - 1BL), which yields the right spatial prediction VRS shown in Fig. 2, by one field period minus two line periods minus two block periods (1F - 2L - 2BL), which yields the right temporal prediction VRT shown in Fig. 2, and by one field period minus two line periods plus two block periods (1F -2L + 2BL), which yields the left temporal prediction VLT shown in Fig. 2. If a block comprises n video lines, a line period in the sense as described above has a duration which is such that the vector of the block above the present block is obtained, i.e. a line period corresponds to n times a video line period. Outputs of the four feedback delays are coupled to corresponding inputs of the vector estimation block 301.

In the block diagram of Fig. 3B, which shows an HD motion estimator composed of four ND motion estimators each processing one of the four quadrants shown in Fig. 1, each ND motion estimator 311 receives the input video signal of the corresponding quadrant. Each ND motion estimator 311 furnishes its predictions to a four quadrants prediction link block 313, which in its turn, furnishes predictions from the other three ND motion estimators. With proper control signals, the predictions coming from the other quadrants are selected when they are not available in the same quadrant. In order to guarantee the synchronization of the predictions at the input of the selectors, proper time shifts of the quadrants are necessary.

Fig. 4 shows a detailed block diagram of an example of a recursive HD motion estimator which is composed of four linked ND motion estimators A, B, C, D and satisfies the proper synchronization criterion. The lower quadrants C and D are processed one active field later than the upper quadrants A and B. The right quadrants B and D are processed one active line later than the left quadrants A and C. The four quadrants demultiplexer 4Q-DMPX can be realized with a buffer memory, so the time shifts of the quadrants can be arranged by reading the quadrants with proper delays. Four outputs of the demultiplexer 4Q-DMPX are coupled to four respective recursive ND motion vector estimators A, B, C, D, which parallel-process the four quadrants into which the input video signal is divided. Each of these ND motion vector estimators comprises a vector estimation block 401 furnishing an output motion vector to a four quadrants multiplexer 4Q-MPX. Inside each ND motion vector estimator, the output of the vector estimation block 401 is coupled to four feedback delays 403, 405, 407, 409 respectively delaying by one line period plus one block period (1L + 1BL), which yields the left spatial prediction VLS shown in Fig. 2, by one line period minus one block period (1L - 1BL), which yields the right spatial prediction VRS shown in Fig. 2, by one field period minus two line periods minus two block periods (1F - 2L - 2BL), which yields the right temporal prediction VRT shown in Fig. 2, and by one field period minus two line periods plus two block periods (1F -2L + 2BL), which yields the left temporal prediction VLT shown in Fig. 2. Again, if a block comprises n video lines, a line period in the sense as described above has a duration which is such that the vector of the block above the present block is obtained, i.e. a line period corresponds to n times a video line period. Outputs of the four feedback delays 403, 405, 407, 409 are coupled to corresponding inputs of the vector estimation blocks 401 either directly or through selectors.

In the left upper ND motion vector estimator A, there will be no left spatial prediction VLS from an adjacent quadrant, so that the output of the feedback delay 403A furnishing the VLS prediction is directly coupled to the vector estimation block. However, there might be a need for a right spatial prediction VRS from quadrant B, a right temporal prediction VRT from quadrants B, C or D, and a left temporal prediction VLT from quadrant C. Therefore, three selectors 415A, 417A, 419A switch the required predictions VLS, VRT and VLT from the present quadrant A or from one of the adjacent quadrants B,C,D to the vector estimation block 401A of ND motion vector estimator A.

In a similar manner, in the upper right ND motion vector estimator B, there will be no right spatial prediction VRS from an adjacent quadrant, so that the output of the feedback delay 405B furnishing the VRS prediction is directly coupled to the vector estimation block 401B. However, there might be a need for a left spatial prediction VLS from quadrant A, a right temporal prediction VRT from quadrant D, and a left temporal prediction VLT from quadrants A, C or D. Therefore, three selectors 415B, 417B, 419B switch the required predictions VLS, VRT and VLT from the present quadrant B or from one of the adjacent quadrants A,C,D to the vector estimation block 401B of ND motion vector estimator B.

Similarly, in the lower left ND motion vector estimator C, there will be no left temporal prediction VLT from an adjacent quadrant, so that the output of the feedback delay 409C furnishing the VLT prediction is directly coupled to the vector estimation block 401C. However, there might be a need for a left spatial prediction VLS from quadrant A, a right temporal prediction VRT from quadrant D, and a right spatial prediction VRS from quadrants A, B or D. Therefore, three selectors 415C, 417C, 419C switch the required predictions VLS, VRT and VRS from the present quadrant C or from one of the adjacent quadrants A,B,D to the vector estimation block 401C of ND motion vector estimator C.

And finally, in the lower right ND motion vector estimator D, there will be no right temporal prediction VRT from an adjacent quadrant, so that the output of the feedback delay 407D furnishing the VRT prediction is directly coupled to the vector estimation block 401D. However, there might be a need for a left spatial prediction VLS from quadrants A, B or C, a right spatial prediction VRS from quadrant B, and a left temporal prediction VLT from quadrant C. Therefore, three selectors 415D, 417D, 419D switch the required predictions VLS, VRS and VLT from the present quadrant D or from one of the adjacent quadrants A,B,C to the vector estimation block 401D of ND motion vector estimator D.

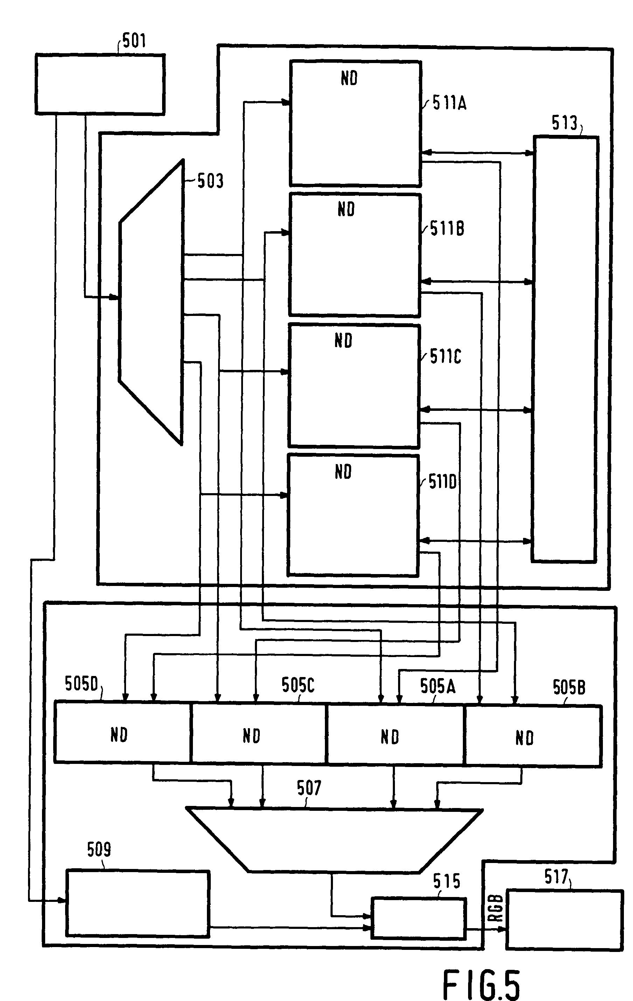

Fig. 5 shows a block diagram of an HD motion compensated upconverter or field number doubler, in which the four quadrants motion estimator cooperates with a four quadrants motion compensated interpolation circuit. A receiver circuit 501 supplies a luminance signal to a four quadrants demultiplexer 503 like the four quadrants demultiplexer 4Q-DMPX of Fig. 4. This four quadrants demultiplexer 503 furnishes the video signals of the four quadrants to four ND motion vector estimators 511A, 511B, 511C, 511D which interchange predictions with a four quadrants predictions link block 513. The four quadrants' video signals from the demultiplexer 503 and the motion vectors from the ND motion vector estimators 511A, 511B, 511C, 511D are applied to an HD interpolator which comprises four parallel ND luminance interpolators 505A, 505B, 505C, 505D which each interpolate one of the four quadrants. Outputs of these four interpolators 505A, 505B, 505C, 505D are multiplexed by a four quadrants multiplexer 507. The chrominance signal from the receiver circuit 501 is interpolated in an HD chrominance interpolator 509. Outputs of the HD chrominance interpolator 509 and of the multiplexer 507 are applied to a matrix circuit 515 which furnishes RGB signals to a monitor 517.

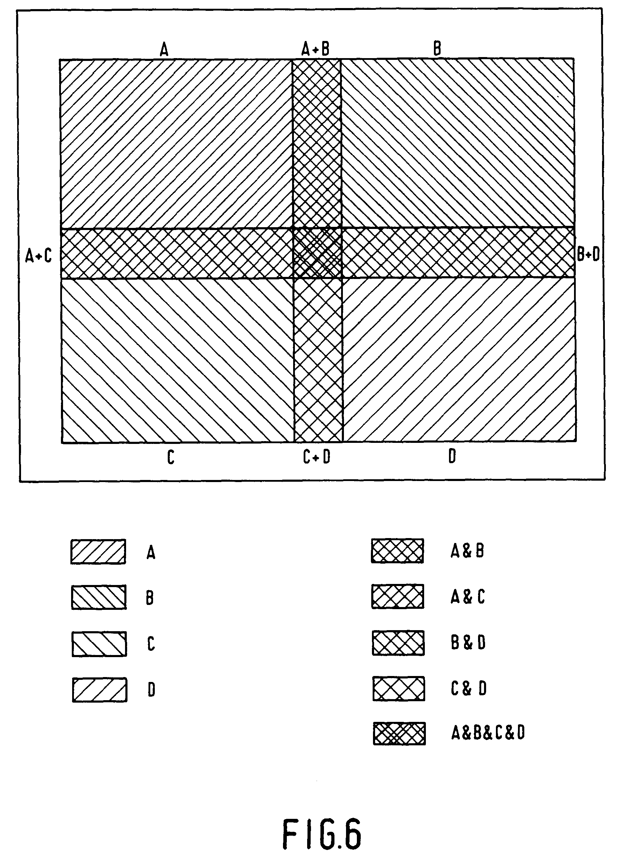

The recursive estimation which involves predictions at different spatial positions is not present in the interpolation circuit, so that there is no need for a link of the four quadrants in the interpolation circuit. But another problem occurs in the four quadrants demultiplexing of the interpolation circuit, which problem is common to the motion estimator and the interpolation circuit. In both parts of the upconverter, there are operations like vector shifts or FIR filtering operations, in which the output depends on the input evaluated at different spatial positions, thus requiring data from the other quadrants. For these operations, there is no need for a link as described above, but an appropriate overlap of the four quadrants is sufficient to solve the problem. Fig. 6 shows a preferred manner of demultiplexing the incoming HD video signal to obtain such an overlap. This overlapping demultiplexing is used in the four quadrants demultiplexers 4Q-DMPX and 503 of Figs. 4 and 5.

It will be evident that on the basis of the examples described above, the man skilled in the art will be able to design many alternative embodiments all falling within the scope of this invention as defined by the following claims.

## Claims

1. A recursive video signal processor, comprising:
means (4Q-DMPX) for demultiplexing a video signal into a plurality of horizontally and vertically adjacent sections (A,B,C,D), wherein said demultiplexing means (4Q-DMPX) comprise delay means for delaying video signals applied to horizontally adjacent sections (A,B; C,D) by one line period with respect to each other and for delaying video signals applied to vertically adjacent sections (A,C; B,D) by one field period with respect to each other;
a plurality of parallel video signal processing means (301) coupled to respective outputs of said demultiplexing means (4Q-DMPX), each one of said video signal processing means (301) recursively processing one of said horizontally and vertically adjacent sections (A,B,C,D) by means of a plurality of feedback loops (303-309) having mutually different feedback delay periods; and
link means (313) for providing a mutual selective coupling of respective predetermined ones of said plurality of mutually different feedback loops (303-309) of said plurality of parallel video signal processing means (301), to apply to each one of said parallel video signal processing means (301), data from at least one other video signal processing means.

2. A recursive video signal processor as claimed in Claim 1, wherein each one of said video signal processing means comprise a plurality of spatial and/or temporal feedback delay means (403A-409A) coupled to an output of the relevant video signal processing means (401A), and wherein said link means comprise a plurality of selector means (415-419) each for selectively coupling outputs of respective predetermined ones of said feedback delay means (403A-409A) of several video signal processing means (401A, 401B, 401C, 401D) including the relevant video signal processing means (401A), to inputs of the relevant video signal processing means (401A).

3. A recursive video signal processor as claimed in Claim 1, wherein said horizontally and vertically adjacent sections (A,B,C,D) partially overlap.

## Patentansprüche

1. Rekursiver Videosignalprozessor, mit
Mitteln (4Q-DMPX) zum Demultiplexieren eines Videosignals in eine Anzahl horzontal und vertikal aneinander grenzende Teile (A, B, C, D), wobei die genannten Demultiplexierungsmittel (4Q-DMPX) Verzögerungsmittel aufweisen zum Verzögern von Videosignalen, die horzontal aneinander grenzenden Teilen (A, B; C, D) zugeführt werden, um eine Zeilenperiode gegenüber einander und zum Verzögern von Videosignalen, die vertikal aneinander grenzenden Teilen (A, C; B, D) zugeführt werden, um eine Teilbildperiode gegenüber einander;
einer Anzahl paralleler Videosignalverarbeitungsmittel (301), die mit betreffenden Ausgängen der genannten Demultiplexierungsmittel (4Q-DMPX) gekoppelt sind, wobei die genannten Videosignalverarbeitungsmittel (301) je rekursiv einen der genannten horizontal und vertikal aneinander grenzenden Teile (A, B, C, D) mittels einer Anzahl Rückkopplungsschleifen (303 - 309) mit untereinander verschiedenen Rückkopplungsverzögerungsperioden bearbeiten; und
Verbindungsmitteln (313) zum Schaffen einer untereinander selektiven Kopplung der betreffenden vorbestimmten Schleifen der genannten Anzahl untereinander verschiedenen Rückkopplungsschleifen (303 - 309) der genannten parallelen Videosignalverarbeitungsmittel (301), um jedem der genannten parallelen Videosignalverarbeitungsmittel (301) mit Daten von wenigstens einem anderen Videosignalverarbeitungsmittel zu versehen.

2. Rekursiver Videosignalprozessor nach Anspruch 1, wobei jedes der genannten Videosignalverarbeitungsmittel eine Anzahl Raum- und/oder Zeit-Rückkopplungsverzögerungsmittel (403A - 409A) aufweist, die mit einem Ausgang der betreffenden Videosignalverarbeitungsmittel (401A) gekoppelt sind, und wobei die genannten Verbindungsmittel eine Anzahl Selektionsmittel (415 - 419) aufweisen, je zur selektiven Kopplung von Ausgängen der betreffenden vorbestimmten Mittel der genannten Rückkopplungsverzögerungsmittel (403A - 409A) von verschiedenen Signalverarbeitungsmitteln (401A, 401B, 401C, 401D) mit dem betreffenden Videosignalverarbeitungsmittel (401A) mit Eingängen des betreffenden Videosignalverarbeitungsmittels (401A).

3. Rekursiver Videosignalprozessor nach Anspruch 1, wobei die genannten horizontal und vertikal aneinander grenzenden Teile (A, B, C, D) sich teilweise überlappen.

## Revendications

1. Processeur de signal vidéo récursif comportant:
des moyens (4Q-DMPX) pour démultiplexer un signal vidéo en une pluralité de sections horizontalement et verticalement contiguës (A,B,C,D) dans lesquelles lesdits moyens de démultiplexage (4Q-DMPX) comportent des moyens de retard pour retarder des signaux vidéo appliqués à des sections horizontalement contiguës (A,B;C,D) d'une période de ligne l'un par rapport à l'autre et pour retarder des signaux vidéo appliqués à des sections verticalement contiguës (A,C;B,D) d'une période de trame l'un par rapport à l'autre;
une pluralité de moyens de traitement de signal vidéo parallèles (301) couplés à de propres sorties desdits moyens de démultiplexage (4Q-DMPX), chacun desdits moyens de traitement de signal vidéo (301) traitant récursivement l'une desdites sections horizontalement et verticalement contiguës (A,B,C,D) au moyen d'une pluralité de boucles de réaction (303-309) présentant des périodes de retard de réaction mutuellement différentes; et
des moyens de couplage (313) pour fournir un couplage sélectif mutuel de propres boucles prédéterminées de ladite pluralité de boucles de réaction mutuellement différentes (303-309) de ladite pluralité de moyens de traitement de signal vidéo parallèles (301), pour appliquer à chacun desdits moyens de traitement de signal vidéo parallèles (301) des données provenant d'au moins l'un d'autres moyens de traitement de signal vidéo.

2. Processeur de signal vidéo récursif selon la revendication 1, caractérisé en ce que chacun desdits moyens de traitement de signal vidéo comporte une pluralité de moyens de retard de réaction spatiaux et/ou temporels (403A-409A) couplés à une sortie des moyens de traitement de signal vidéo en question (401A), et en ce que lesdits moyens de couplage comportent une pluralité de moyens de sélection (415-419) chacun pour le couplage sélectif de sorties de propres moyens prédéterminés desdits moyens de retard de réaction (403A-409A) de plusieurs moyens de traitement de signal vidéo (401A, 401B, 401C, 401D), y compris les moyens de traitement de signal vidéo en question (401A), à des entrées des moyens de traitement de signal vidéo en question (401A).

3. Processeur de signal vidéo récursif selon la revendication 1, caractérisé en ce que lesdites sections horizontalement et verticalement contiguës (A,B,C,D) se recouvrent partiellement.
